# EUROPÄISCHE PATENTSCHRIFT

(11) **EP 0 320 446 B1**
(45) Veröffentlichungstag und Bekanntmachung des Hinweises auf die Patenterteilung: **07.04.1993**
(21) Anmeldenummer: 88810816.4
(22) Anmeldetag: 29.11.1988
(51) Int. Cl.: C09B 41/00, C09B 45/14

(54) **Verfahren zur Herstellung von metallisierbaren Azofarbstoffen**
Process for the preparation of metallizable azo dyes
Procédé de préparation de colorants azo métallisables

(30) Priorität: 07.12.1987 CH 4758/87
(43) Veröffentlichungstag der Anmeldung: 14.06.1989
(73) Patentinhaber: CIBA-GEIGY AG, 4002 Basel (CH)
(72) Erfinder: Joswig, Hans Peter, Dr., D-7889 Grenzach-Wyhlen 1 (DE); Huber, Werner, D-7881 Schwörstadt (DE)

(56) Entgegenhaltungen:
- US-A- 2 812 321
- CHEMICAL ABSTRACTS, Band 106, Nr. 22, Juni 1987, Seite 88, Nr. 178104g, Columbus, Ohio, US; & JP-A-61 254 550 (MITSUI TOATSU CHEMICALS, INC.) 12-11-1986
- Rys, Zollinger "Farbstoffchemie" ISBN 3-527-25964-3 (1982) Seiten 59 und 71

## Beschreibung

Die Kupplung von 1-Diazo-2-hydroxynaphthalin-4-sulfonsäure bzw. von der entsprechenden eine Nitrogruppe enthaltende Komponente auf eine Kupplungskomponente der Benzol-, Naphthalin- oder heterocyclischen Reihe, die eine Hydroxygruppe in Nachbarstellung zu der Kupplungsstelle enthält, verläuft in einigen Fällen langsam und mit unbefriedigenden Ausbeuten.

In den letzten Jahren ist man zunehmend bestrebt, Herstellungsverfahren für Farbstoffe und deren Zwischenprodukte zu automatisieren und zu optimieren, und zwar sowohl was den Herstellungsprozess anbetrifft, als auch hinsichtlich der Aufarbeitung. Um hier zu befriedigenden Ergebnissen zu gelangen, ist man auf Verfahren angewiesen, die sich durch folgende Kriterien auszeichnen: möglichst quantitative Ausbeute, reproduzierbar gute Qualität, Umsetzungen mit möglichst wenig Aufarbeitungsschritten sowie schnelle Umsetzungen, die eine hohe Zahl von Umsetzungen pro Zeiteinheit ermöglichen.

Es wurde nun gefunden, dass man diese Ziele mit dem erfindungsgemässen Verfahren weitgehend erreichen kann.

Das erfindungsgemässe Verfahren zur Herstellung von Azofarbstoffen der Formel 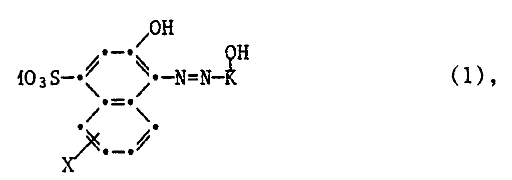
worin K der Rest einer Kupplungskomponente der Benzol- oder Naphthalinreihe oder der heterocyclischen Reihe ist, wobei die Hydroxygruppe in Nachbarstellung zu der Azogruppe an K gebunden ist, X Wasserstoff oder Nitro und M ein Alkali- oder Ammoniumion bedeutet, ist dadurch gekennzeichnet, dass man eine Diazokomponente der Formel 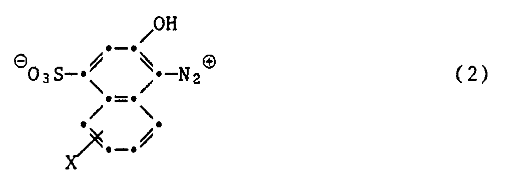
in Gegenwart von Zinksalzen unter Inertgasatmosphäre auf eine Kupplungskomponente der Formel 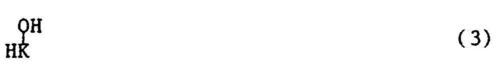
kuppelt, wobei K und X in den Formeln (2) und (3) die unter Formel (1) angegebenen Bedeutungen haben.

Die Kupplung von Verbindungen der Formel (2) auf Verbindungen der Formel (3) ist als schwierig bekannt. So wurde versucht mit Hilfe verschiedener Katalysatoren, wie z.B. in Gegenwart von Calzium- oder Magnesiumsalzen, oder durch Kupplung unter Stickstoffatmosphäre die Ausbeute zu verbessern. Calcium- und Magnesiumsalze verbessern die Ausbeute; nachteilig ist der meist schwierig abzutrennende Salzgehalt nach beendeter Reaktion.

Es ist überraschend, dass das erfindungsgemässe Verfahren eine deutliche Steigerung der Ausbeute bei der Kupplung in Gegenwart von Zinksalzen und unter Inertgasatmosphäre ergibt, und dass die Umsetzung bereits nach sehr kurzer Zeit nahezu vollständig beendet ist.

Als Zinksalz verwendet man in dem erfindungsgemässen Verfahren zweckmässigerweise Zinkhalogenide. Gemäss einer bevorzugten Ausführungsform des erfindungsgemässen Verfahrens verwendet man Zinkchlorid.

Die Menge, in der das Zinksalz in dem erfindungsgemässen Verfahren verwendet werden kann, kann in weiten Crenzen schwanken, im allgemeinen hat sich die 0,2- bis 1-fache molare Menge Zinksalz, insbesondere Zinkchlorid bezogen auf die molare Menge der Diazokomponente der Formel (2) als vorteilhaft erwiesen.

Eine bevorzugte Ausführungsform des erfindungsgemässen Verfahrens ist dadurch gekennzeichnet, dass man die 0,45- bis 0,65-fache molare Menge Zinksalz, insbesondere Zinkchlorid, verwendet.

Eine weitere bevorzugte Ausführungsform des erfindungsgemässen Verfahrens ist dadurch gekennzeichnet, dass man bei einer Temperatur zwischen 27 und 40°C, insbesondere zwischen 30 und 35°C, am vorteilhaftesten zwischen 32 und 34°C, kuppelt.

Als Inertgas kommt in dem erfindungsgemässen Verfahren vorzugsweise Stickstoff in Betracht.

Die Kupplung der Verbindung der Formel (2) mit der Verbindung der Formel (3) wird in wässriger Lösung ausgeführt. Als pH hat sich für die Kupplung ein Wert zwischen 10 und 12, insbesondere ein pH-Wert um 11, als vorteilhaft erwiesen. Die sauer vorliegende Diazokomponente der Formel (2) wird zweckmässigerweise vor der Kupplung mit Alkalihydroxid zunächst auf einen pH-Wert von ca. 6,5 gestellt.

Eine besonders bevorzugte Ausführungsform des erfindungsgemässen Verfahrens ist dadurch gekennzeichnet, dass man die Verbindung der Formel (2) mit Zinkchlorid, insbesondere der 0,5- bis 0,6-fach molaren Menge, bezogen auf die Verbindung der Formel (2) versetzt, die Lösung unmittelbar vor der Kupplung auf den pH-Wert zwischen 6,5 und 7 einstellt, und dann so schnell wie möglich bei einer Anfangstemperatur von ca. 30°C unter Stickstoff eine mittels Alkali auf einen pH-Wert zwischen 9 und 13 eingestellte Lösung der Kupplungskomponente der Formel (3) zufliessen lässt.

Das molare Verhältnis der Diazokomponente der Formel (2) zu der Kupplungskomponente der Formel (3) ist 0,8:1,2 bis 1,0:1,2, insbesondere 0,95:1,15 bis 1,00:1,15.

Eine weitere bevorzugte Ausführungsform des erfindungsgemässen Verfahrens ist dadurch gekennzeichnet, dass man adiabatisch kuppelt, wobei eine Anfangstemperatur von mindestens 30°C sich als besonders vorteilhaft erwiesen hat.

Nach erfolgter Kupplung kann der Azofarbstoff der Formel (1) nach Reinigung, wie z.B. Aussalzen, weiterverarbeitet werden, z.B. durch Metallisierung zu einem Metallkomplexfarbstoff. Zur Isolierung des Farbstoffes der Formel (1) hat es sich als günstig erwiesen die Kupplungsmasse kurz zu erwärmen, z.B. auf eine Temperatur von 60 bis 90°C, wodurch eine gut filtrierbare Form des Kupplungsproduktes erhalten wird.

Nach erfolgter Kupplung kann das Zink nahezu vollständig als Zinkcarbonat ausgefällt werden, so dass keine Belastung des Abwassers resultiert.

Die Diazokomponenten der Formel (2), die nach dem erfindungsgemässen Verfahren eingesetzt werden können, sind insbesondere 1-Diazo-2-hydroxynaphthalin-4-sulfonsäure und 1-Diazo-6-nitro-2-hydroxynaphthalin-4-sulfonsäure. Die Diazokomponenten der Formel (2) sind bekannt und werden nach bekannten Verfahren hergestellt.

Die Kupplungskomponenten der Formel (3) sind bekannt und werden nach bekannten Verfahren hergestellt. Vorzugsweise werden in dem erfindungsgemässen Verfahren Kupplungskomponenten eingesetzt, die der Benzol-oder der Naphthalinreihe, oder der 5-Pyrazolon, Hydroxychinolin- oder Acetoacetarylid- oder Benzoylessigsäure-Reihe angehören.

Die Kupplungskomponenten der Formel (3) können ausser durch die Hydroxygruppe noch durch folgende Substituenten substituiert sein:
C₁-C₆-Alkyl, C₁-C₆-Alkoxy, C₂-C₆-Alkanoylamino, C₁-C₆-Alkoxycarbonylamino, Halogen, Sulfo, Sulfonamid und Sulfongruppen.

Als C₂-C₆-Alkanoylamino kommt z.B. Acetylamino, Propionylamino und Butyrylamino in Betracht.

Als C₁-C₆-Alkoxycarbonylamino kommt z.B. Methoxycarbonylamino und Aethoxycarbonylamino in Betracht.

Als C₁-C₆-Alkyl kommt z.B. Methyl, Aethyl, Propyl, Isopropyl, Butyl, sek.-Butyl, tert.-Butyl, Isobutyl, Pentyl und Hexyl in Betracht.

Als C₁-C₆-Alkoxy kommt z.B. Methoxy, Aethoxy, Propoxy, Isopropoxy und Butoxy in Betracht.

Als Halogen kommt z.B. Fluor, Brom und insbesondere Chlor in Betracht.

Als Sulfonamido kommt z.B. -SO₂NH₂, SO₂NHC₁-C₆-Alkyl, wie
z.B. -SO₂NHCH₃ und -SO₂NHC₂H₅ und -SO₂N(C₁-C₆-Alkyl)₂ wie
z.B. -SO₂N(CH₃)₂ und -SO₂N(C₂H₅)₂) sowie 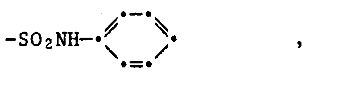
wobei der Phenylrest substituiert sein kann, z.B. durch Sulfo oder Carboxy, in Betracht.

Als Sulfongruppe kommt z.B. -SO₂-C₁-C₆-Alkyl, wie -SO₂-CH₃, und -SO₂-Aryl, wie Phenylsulfonyl, in Betracht.

Gemäss einer besonders bevorzugten Ausführungsform des erfindungsgemässen Verfahrens verwendet man Kupplungskomponenten der Formel (3), worin K ein Benzol-, Naphthalin- oder 1-Phenyl-3-methylpyrazol-5-on-Rest ist, der ein bis drei der oben genannten Substituenten enthalten kann; insbesondere bedeutet K den Naphthylrest.

Besonders geeignete Kupplungskomponenten sind Phenole, die mit C₁-C₆-Alkyl und/oder C₁-C₆-Alkanoylamino, C₁-C₆-Alkoxycarbonylamino substituiert sind und vor allem Naphthole, die gegebenenfalls mit Chlor, C₂-C₆-Alkanoylamino-, C₁-C₆-Alkoxycarbonylamino-, Sulfo, Sulfonamid- oder Sulfongruppen substituiert sind, wie z.B. 4-Methylphenol, 4-t-Butylphenol, 2,4-Dimethylphenol, 2-Acetylamino-4-methylphenol, 1- oder 2-Naphthol, 1-Naphthol-3-, -4-oder -5-sulfosäure, 2-Naphthol-3-, -4-, -5-, -6-, -7- oder -8-sulfosäure, 2-Naphthol-6-sulfamid, 1-Acetylamino-7-naphthol, 1-Acetylamino-6-naphthol, 1-Propionylamino-7-naphthol und 1-Carbomethoxyamino-7-naphthol.

Eine besonders interessante Ausführungsform des erfindungsgemässen Verfahrens ist dadurch gekennzeichnet, dass man 1-Diazo-2-hydroxynaphthalin-4-sulfonsäure als Diazokomponente der Formel (2) verwendet.

Eine weitere besonders interessante Ausführungsform des erfindungsgemässen Verfahrens ist dadurch gekennzeichnet, dass man β-Naphthol als Kupplungskomponente der Formel (3) verwendet.

Die nach dem erfindungsgemässen Verfahren erhaltenen Azofarbstoffe eignen sich zur Herstellung von Metallkomplexfarbstoffen, wie z.B. Chrom- oder Kobaltkomplexazofarbstoffen, wobei die Metallisierung nach an sich bekannten Methoden erfolgt.

Aus der US-A-2,812,321 und Chemical Abstracts, Band 106, Nr. 178104g sind ähnliche Verfahren bekannt, welche jedoch nicht alle vorteilhaften Eigenschaften des erfindungsgemässen Verfahrens aufweisen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

In 700 Teilen Wasser werden 137,5 Teile 1-Diazo-2-hydroxynaphthalin-4-sulfonsäure eingetragen und durch Zugabe von 22 Teilen Natriumhydroxid auf den pH-Wert 2,5 bis 3 eingestellt. Anschliessend gibt man noch 100 Teile Eis hinzu und versetzt dann mit einer Lösung von 2,2 Teilen des Natriumsalzes der Tetralinsulfonsäure in 25 Teilen Wasser von 50°. Man lässt 5 Minuten nachrühren und lässt dann 82 Teile einer 50%-igen Lösung von Zinkchlorid in Wasser zulaufen. Der pH-Wert der dickflüssig gelben Suspension wird mit ca. 2,5-Teilen Natriumhydroxid auf 6,4 bis 6,6 gestellt und der Reaktionskessel mit Stickstoff inertisiert. Eine 30° warme Lösung enthaltend 250 Teile Wasser, 30 Teile Natriumhydroxid und 92,5 Teile β-Naphthol wird unter Stickstoffatmosphäre zu der Suspension der Diazokomponente zufliessen gelassen in einem Zeitraum von ca. 30 Minuten. Die Temperatur steigt auf ca. 30° an. Unter Stickstoffatmosphäre wird unmittelbar nach Zulaufen der pH-Wert mit ca. 15 Teilen Natriumhydroxid auf 11 gestellt. Bei einer Temperatur von ca. 32° und einem pH-Wert von ca. 11 lässt man 2 Stunden unter Stickstoffatmosphäre rühren bis die Kupplung beendet ist. Anschliessend ist kein Stickstoffgas mehr notwendig. Durch Zugabe von ca. 100 Teilen einer 38%-igen Salzsäure-Lösung wird der pH-Wert auf 1,5 bis 2 eingestellt und die rotbraune Suspension des Monoazofarbstoffes filtriert. Die Ausbeute beträgt ca. 99 % der Theorie bezogen auf eingesetzte Diazokomponente.

Wenn man anstelle von 1-Diazo-2-hydroxynaphthalin-4-sulfonsäure eine äquimolare Menge 1-Diazo-6-nitro-2-hydroxynaphthalin-4-sulfonsäure verwendet, erhält man einen Farbstoff mit ähnlich hoher Ausbeute in verleichbar kurzer Verweilzeit im Kupplungskessel.

### Beispiele 2 bis 4:

Verfährt man wie in Beispiel 1 angegeben, verwendet jedoch statt 82 Teilen einer 50%-igen Zinkchlorid-Lösung die in Tabelle 1 angegebenen Teile einer 50%-igen Zinkchlorid-Lösung, so erhält man den gleichen Farbstoff in ähnlich guter Ausbeute.

**Tabelle 1**

| Beispiele | Teile 50%-iger Zinkchlorid-Lösung |
|---|---|
| 2 | 70 Teile |
| 3 | 100 Teile |
| 4 | 140 Teile |

## Patentansprüche

1. Verfahren zur Herstellung von Azofarbstoffen der Formel 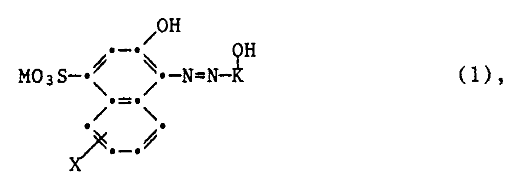 worin K der Rest einer Kupplungskomponente der Benzol- oder Naphthalinreihe oder der heterocyclischen Reihe ist, wobei die Hydroxygruppe in Nachbarstellung zu der Azogruppe an K gebunden ist, X Wasserstoff oder Nitro und M ein Alkali- oder Ammoniumion bedeutet, dadurch gekennzeichnet, dass man eine Diazokomponente der Formel 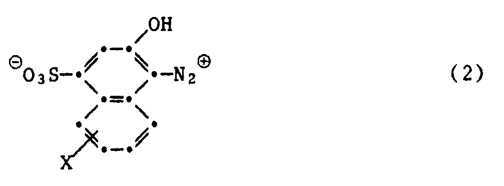 in Gegenwart von Zinksalzen unter Inertgasatmosphäre auf eine Kupplungskomponente der Formel 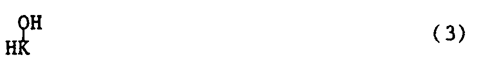 kuppelt, wobei K und X in den Formeln (2) und (3) die unter Formel (1) angegebenen Bedeutungen haben.

2. Verfahren gemäss Anspruch 1, dadurch gekennzeichnet, dass man in Gegenwart von Zinkhalogeniden, insbesondere Zinkchlorid kuppelt.

3. Verfahren gemäss einem der Ansprüche 1 und 2, dadurch gekennzeichnet, dass man unter Stickstoffgasatmosphäre kuppelt.

4. Verfahren gemäss einem der Ansprüche 1 bis 3, dadurch gekennzeichnet, dass man bezogen auf die molare Menge der Diazokomponente der Formel (2) in Gegenwart der 0,2- bis 1-fach molaren Menge, insbesondere der 0,45- bis 0,65-fach molaren Menge, Zinkhalogenid, insbesondere Zinkchlorid, kuppelt.

5. Verfahren gemäss einem der Ansprüche 1 bis 4, dadurch gekennzeichnet, dass man bei einem pH-Wert zwischen 10 und 12 kuppelt.

6. Verfahren gemäss einem der Ansprüche 1 bis 5, dadurch gekennzeichnet, dass man adiabatisch kuppelt.

7. Verfahren gemäss einem der Ansprüche 1 bis 6, dadurch gekennzeichnet, dass man eine Kupplungskomponente der Formel (3) verwendet, worin K der Rest einer Kupplungskomponente der Benzol-oder Naphthalinreihe oder der 5-Pyrazolon, Hydroxychinolin-, Acetoacetarylid- oder Benzoylessigsäure-Reihe ist.

8. Verfahren gemäss Anspruch 7, dadurch gekennzeichnet, dass K ein Benzol-, Naphthalin- oder 5-Pyrazolonrest ist, der substituiert sein kann durch C₁-C₆-Alkyl, C₁-C₆-Alkoxy, C₂-C₆-Alkanoylamino, C₁-C₆-Alkoxycarbonylamino, Halogen, Sulfo und Sulfonamid- und Sulfongruppen.

9. Verfahren gemäss einem der Ansprüche 1 bis 8, dadurch gekennzeichnet, dass man eine Kupplungskomponente der Formel (3) verwendet, worin K der Naphthylrest ist.

10. Verfahren gemäss einem der Ansprüche 1 bis 9, dadurch gekennzeichnet, dass man β-Naphthol als Kupplungskomponente verwendet.

11. Verfahren gemäss einem der Ansprüche 1 bis 10, dadurch gekennzeichnet, dass man 1-Diazo-2-hydroxynaphthalin-4-sulfonsäure als Diazokomponente der Formel (2) verwendet.

## Claims

1. A process for the preparation of an azo dye of formula 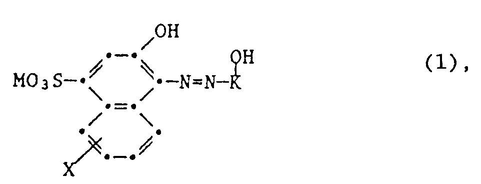 in which K is the radical of a coupling component of the benzene or naphthalene series or of the heterocyclic series, and the hydroxyl group is attached to K adjacent to the azo group, X is hydrogen or nitro and M is an alkali metal ion or an ammonium ion, which process comprises coupling a diazo component of formula 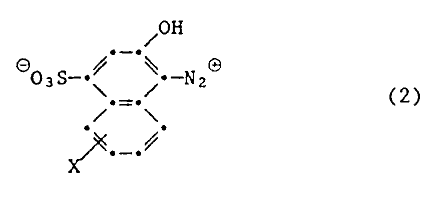 in the presence of a zinc salt and under an inert gas atmosphere, to a coupling component of formula 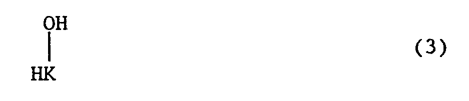 in which formulae (2) and (3) K and X are as defined for formula (1).

2. A process according to claim 1, wherein the coupling is carried out in the presence of a zinc halide, in particular zinc chloride.

3. A process according to one of claims 1 and 2, wherein the coupling is carried out under a nitrogen gas atmosphere.

4. A process according to one of claims 1 to 3, wherein the coupling is carried out in the presence of the 0.2- to 1-fold molar amount, in particular of the 0.45- to 0.65-fold molar amount, based on the molar amount of the diazo component of formula (2), of a zinc halide, in particular zinc chloride.

5. A process according to one of claims 1 to 4, wherein coupling is carried out at a pH of between 10 and 12.

6. A process according to one of claims 1 to 5, wherein the coupling is carried out adiabatically.

7. A process according to one of claims 1 to 6, which comprises the use of a coupling component of formula (3) in which K is the radical of a coupling component of the benzene or naphthalene series or the 5-pyrazolone, hydroxyquinoline, acetoacetarylide or benzoylacetic acid series.

8. A process according to claim 7, wherein K is a radical of the benzene or naphthalene series or is a 5-pyrazolone radical, which radicals may be substituted by C₁-C₆alkyl, C₁-C₆alkoxy, C₂-C₆alkanoylamino, C₁-C₆alkoxycarbonylamino, halogen, sulfo, and sulfonamide and sulfone groups.

9. A process according to one of claims 1 to 8, which comprises the use of a coupling component of formula (3) in which K is the naphthyl radical.

10. A process according to one of claims 1 to 9, wherein the coupling component used is β-naphthol.

11. A process according to one of claims 1 to 10, wherein the diazo component of formula (2) used is 1-diazo-2-hydroxynaphthalene-4-sulfonic acid.

## Revendications

1. Procédé de préparation de colorants azoïques de formule : 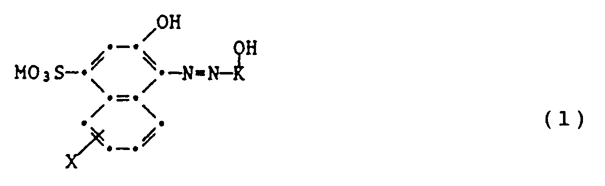 dans laquelle K représente le reste d'un copulant de la série du benzène ou du naphtalène ou de la série hétérocyclique, le groupe hydroxy étant lié à K en position voisine de celle du groupe azo, X représente un atome d'hydrogène ou un groupe nitro et M représente un ion de métal alcalin ou l'ion ammonium, caractérisé en ce que l'on copule un composé diazo de formule : 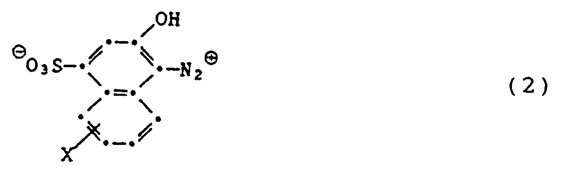 en présence de sel de zinc, sous atmosphère de gaz inerte, avec un copulant de formule : 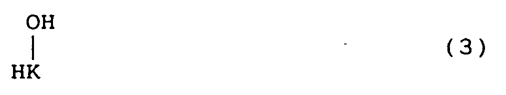 K et X ayant dans les formules (2) et (3) les significations indiquées à propos de la formule (1).

2. Procédé selon la revendication 1, caractérisé en ce que l'on effectue la copulation en présence d'halogénure de zinc, en particulier de chlorure de zinc.

3. Procédé selon la revendication 1 ou 2, caractérisé en ce que l'on effectue la copulation sous atmosphère d'azote.

4. Procédé selon l'une des revendications 1 à 3, caractérisé en ce que l'on effectue la copulation en présence d'une quantité d'halogénure de zinc, en particulier de chlorure de zinc, 0,2 à 1 fois molaire, en particulier 0,45 à 0,65 fois molaire, pour une quantité molaire du composé diazo de formule (2).

5. Procédé selon l'une des revendications 1 à 4, caractérisé en ce que l'on effectue la copulation à une valeur de pH comprise entre 10 et 12.

6. Procédé selon l'une des revendications 1 à 5, caractérisé en ce que l'on effectue la copulation de manière adiabatique.

7. Procédé selon l'une des revendications 1 à 6, caractérisé en ce que l'on utilise un copulant de formule (3) dans laquelle K représente le reste d'un copulant de la série du benzène ou du naphtalène ou de la série de la 5-pyrazolone, de l'hydroxyquinoléine, des acétoacétarylides ou de l'acide benzoylacétique.

8. Procédé selon la revendication 7, caractérisé en ce que K représente un reste de benzène, de naphtalène ou de 5-pyrazolone, qui peut être substitué par un ou plusieurs atomes d'halogène ou groupes alkyle en C₁ à C₆, alcoxy en C₁ à C₆, alcanoylamino en C₂ à C₆, alcoxy(C₁ à C₆)carbonylamino, sulfo, sulfonamido ou sulfonyle.

9. Procédé selon l'une des revendications 1 à 8, caractérisé en ce que l'on utilise un copulant de formule (3) dans laquelle K représente le reste naphtyle.

10. Procédé selon l'une des revendications 1 à 9, caractérisé en ce que l'on utilise le β-naphtol en tant que copulant.

11. Procédé selon l'une des revendications 1 à 10, caractérisé en ce que l'on utilise l'acide 1-diazo-2-hydroxynaphtalène-4-sulfonique en tant que composé diazo de formule (2).
